# EUROPEAN PATENT APPLICATION

(11) **EP 4 844 522 A1**
(43) Date of publication of application: **25.11.2026**
(21) Application number: 26176755.2
(22) Date of filing: 06.05.2026
(51) Int. Cl.: G05D 23/13

(54) **DEVICE FOR COOLING A CRYOGENIC GRINDER OR SIMILAR FOOD PROCESSING PLANT TO A CONTROLLED TEMPERATURE**

(30) Priority: 22.05.2025 IT 202500011692
(71) Applicant: L'Air Liquide, Société Anonyme pour l'Etude et l'Exploitation des Procédés Georges Claude, 75007 Paris (FR)
(72) Inventor: EMANUELLI, Marco, 20152 MILAN (IT)
(74) Representative: Air Liquide

(57) **Abstract**

A device for cooling a feeder plant such as a cryogenic grinder to a constant and controlled temperature comprises a mixing member (40) arranged between at least one liquid fluid tank and the cryogenic grinder (3), valve members (20 to 25) for controlling the fluids inside the device (2) flowing towards the mixing member (40) and then towards the plant (1). The mixing member contains a line (11A) conveying gaseous fluid that terminates near to an end (42) of the mixing member through which a line (10A) conveying liquid fluid enters said mixing member, said line (10A) terminating near to the end (41) of said mixing member (40) opposite the end through which the line (10A) conveying liquid fluid enters, the liquid fluid that exits the respective line cooling the gaseous fluid inside the mixing member.

## Description

The object of the present invention is a device for cooling a machine in a production plant, such as a food processing plant, or a product processed in said plant, according to the preamble to the main claim.

With particular but non-limiting reference to the food sector, there are several known food processing plants in which the machines used to process the food product or the product itself is cooled using a low-temperature fluid. For example, cryogenic grinding is a grinding technique carried out at very low temperature, wherein a fluid, using nitrogen, at a very low temperature and in any case below -100°C, is applied to the product being processed. Such a technique provides known advantages, for example high grinding yields.

With particular but non-limiting reference to a plant of the type mentioned above, it is known that cryogenic grinding is obtained in a machine or apparatus (the cryogenic grinder) into which (liquid) nitrogen is injected directly onto the product being processed. The input of the liquid into the cryogenic grinder is turned on and off by controlling the temperature in the zone of the cryogenic grinder where the nitrogen impinges on the product.

This solution is simple, but has major drawbacks: first of all, it does not allow the product to be processed uniformly, and as a result the quality of the ground product is not consistent. This is because the product is initially at a high temperature and is only cooled (by the liquid nitrogen) a certain time after processing has started, said time depending on the product type.

In addition, the product directly impinged by the liquid nitrogen undergoes high thermal stress ("thermal shock"), which may change its characteristics, for example organoleptic characteristics.

Conversely, if the liquid nitrogen is injected onto the product as it starts the processing cycle, there is a real risk of it solidifying or freezing, which may lead to the real and unacceptable risk of the product material disintegrating at molecular level during the subsequent grinding operation.

In addition to this, the structure and specific mechanical/electronic components of the cryogenic grinder may be affected by mechanical problems. Indeed, this structure and said components, when impinged by liquid nitrogen, undergo sudden temperature changes of the order of 200-250°C compared to the normal temperatures at which they were designed to operate, which may lead to damage that prevents the proper operation thereof. In particular, known solutions may lead to a sudden embrittlement of the zones of the cryogenic grinder impinged by the liquid nitrogen, as these zones move from temperatures above zero degrees centigrade to temperatures well below zero in a few moments, causing them to break.

A method and a device implementing the same in which a gaseous fluid (gaseous nitrogen) suitably cooled by liquid nitrogen is injected into the cryogenic grinder is known to the applicant. Although this solution overcomes many of the drawbacks of injecting liquid nitrogen into the cryogenic grinder and/or onto the product, it has been found that the gaseous nitrogen cools and does not retain the desired values for the time required to use it.

In addition, the known device can overcool the gaseous nitrogen, which could be dangerous for the cryogenic grinding plant or for the operators of the cryogenic grinder.

The present invention is intended to provide a device for injecting a low-temperature gaseous fluid, in particular gaseous nitrogen, cooled by a liquid fluid into a food processing plant, such as a cryogenic grinder that is improved compared to known devices.

In particular, the invention is intended to provide a device of the aforementioned type that is very safe in terms of the mechanical and electrical stability of the plant and the safety of the operators of the cryogenic grinder.

Another objective of the invention is to provide a device of the aforementioned type which allows the gaseous fluid to be cooled so as to avoid the "flash effect" of the liquid fluid used to cool the gaseous fluid, namely premature boiling of the liquid fluid, which may interrupt the flow thereof in the device.

A further objective is to provide a device of the aforementioned type that prevents the liquid fluid from flowing at an excessively low temperature, which could affect the cooling of the gaseous fluid, potentially making the use thereof dangerous for the plant and for the operators of the plant.

Another objective is to provide a device of the aforementioned type that is reliable and safe to use.

A further objective is to provide a device of the aforementioned type that ensures that the flow rate of low-temperature gaseous fluid is constant over time.

This and other objectives which will be apparent to a person skilled in the art are achieved by a device according to the attached claims.

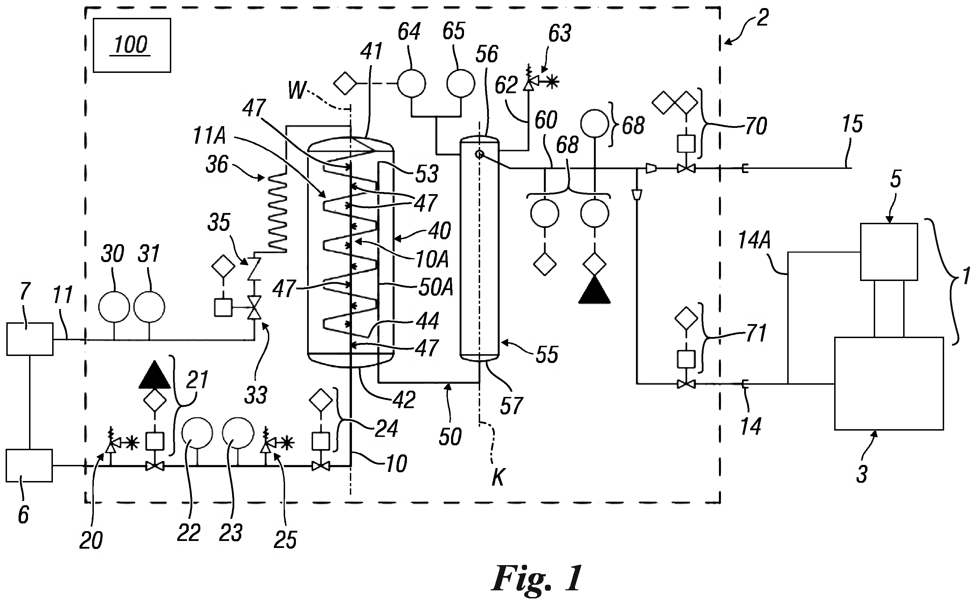

For a better understanding of the invention, the following drawing is attached purely by way of non-limiting example, the sole figure of which is a schematic view of a plant in which the present invention is used.

With reference to the figure, a food processing plant, such as a cryogenic grinding plant, in which the invention is used is generically denoted with reference sign 1. Associated therewith is a device 2 for cooling an operating machine, for example a cryogenic grinder 3 of the plant 1, to a controlled temperature, as well as for cooling the product fed therein to be processed, for example through a feed hopper 5.

In the description and by way of example, the plant 1 is considered to be a cryogenic grinding plant.

The device 2 is arranged between a liquid fluid tank 6, a phase-change heat exchanger 7 in which a gaseous fluid is formed (in a known manner) and the (known) cryogenic grinder 3 with the feeder 5 of the product to be cryogenically ground. The device 2 according to the invention enables the product in the cryogenic grinder to be processed with low-temperature gaseous fluid at a constant pressure and flow rate.

More specifically, the device comprises a first supply line 10 which connects the device directly to the liquid fluid tank 6 and a second supply line 11 which connects the device 2 to the phase-change heat exchanger 7. The second line 11 contains the fluid in the gaseous state.

The device 2 is connected to the cryogenic grinder by a line 14 and by a line 14A, going from the line 14 to the product feeder 5.

More particularly, the device 2 includes a control and command unit 100, shown schematically, that is programmable according to the product being processed and the quality and particle size thereof. The control unit 100 is connected to several valve members and to pressure and temperature sensors for the fluid arranged on the aforementioned lines 10 and 11, and 14 and 15.

More specifically, a first overpressure safety valve 20 and a second overpressure safety valve 25, pressure and temperature measuring devices 22 and 23, and a further valve member 24, or proportional valve, for measuring and regulating the flow are provided on the line 10. These components, and in particular the overpressure safety valve 20 and the proportional valve 24 for flow measurement and adjustment, provide excellent control over the flow of liquid fluid in the line 10, and such control (provided by the control and command unit 100) enables the liquid fluid supply to be interrupted when a (very low) temperature limit is reached, in order to protect the plant 1 and the staff downstream of the device 2.

On the other hand, the line 11 is provided with pressure measuring devices 30 and 31 and a motorized valve member 33 controlled by the control and command unit 100. Another (non-return) valve 35 is arranged on the line 11 at the inlet of a heat exchanger 36. To simplify the description, the heat exchanger 36 is not considered to interrupt said line 14 (i.e. the latter continues through the heat exchanger).

From the heat exchanger 36, the line 11 terminates in a first mixing member 40 (suitably thermally insulated) having a first end 41 and a second end 42 opposite the first end. The mixing member preferably extends vertically along its longitudinal axis W and, for example, has a substantially cylindrical shape with the ends 41 and 42, for example dome-shaped ends, arranged at the top and bottom of said member 40, respectively.

The line 11 enters the mixing member 40 through the first end 41 and the terminal portion 11A thereof inside said member has a serpentine shape. The serpentine-shaped terminal portion 11A is open at the end 44 from which the gaseous fluid can flow out into the mixing member 40.

The line 10 enters the mixing member 40 through the second end 42 thereof and a terminal portion 10A thereof continues until it approaches the first end 41 of the mixing member. In one example, the aforementioned terminal portion 10A is straight and extends along the axis W of the mixing member 40. Nozzles or diffusers 47 for the liquid fluid are provided inside the mixing member 40 along this terminal portion 10A. The line 11A is a tube open at the terminal end 44 thereof located at the second end 42 of the mixing member 40.

The non-return valve 35 is intended to prevent the liquid fluid in the member 40 from entering the gaseous fluid "circuit". In addition, the heat exchanger 36 is in fact the line 11 wound about the mixing member 40 to pre-cool the gaseous fluid (via indirect heat exchange) before the line 11 enters the mixing member 40, where the heat exchange takes place directly (between liquid and gaseous fluids).

Advantageously, the serpentine-shaped terminal portion 11A of the gaseous fluid line is placed about the straight terminal portion 10A of the liquid fluid line and is impinged by the liquid fluid sprayed by the nozzles or diffusers 47. The latter are therefore used to cool the gas while it is still inside the terminal portion 11A of the line 11 and also after exiting at the end 44 of said line 11, the gas being present inside the mixing member 40 and rising from a region near the second end 42 of said mixing member (where said end 44 is located) towards the first end 41 of said mixing member 40.

This allows for continuous cooling of the gas exiting the line 11 while avoiding a sudden "heating" of the liquid fluid, avoiding the flash effect. This effect consists of the rapid evaporation of a large quantity of liquid fluid due to the high temperature of the gaseous fluid which comes into contact with the very low temperature of the liquid fluid, causing it to evaporate instantaneously.

The gaseous fluid therefore remains in contact with the liquid fluid for a prolonged period. This gaseous fluid, once cooled, is withdrawn from the mixing member 40 through a withdrawal line 50, a portion 50A of which is arranged inside the mixing member 40 and opens at an end 53 near to the first end 41 of said mixing member. Said withdrawal line 50 extends along the entire mixing member and exits through the second end 42 thereof.

The withdrawal line enters a buffer tank or volume 55 (also suitably thermally insulated) from which an outlet line 60 exits and splits into the lines 14 and 15.

More specifically, the outlet line 60 exits near a first end 56 of the buffer tank or volume 55, while the withdrawal line 50 enters the tank through the second end 57 thereof opposite the first end. Again in this case, the buffer tank or volume 55 advantageously extends along a longitudinal axis K which is vertical.

The buffer tank or volume 55 is associated with a discharge line 62 on which a safety valve 63 is placed, and this buffer tank or volume 55 is connected to pressure measuring devices 64 and temperature measuring devices 65.

Temperature measuring devices 68 are connected to the outlet line 60.

These temperature measuring devices 68, which measure the temperature of the gaseous fluid exiting the buffer tank or volume, and the safety valve 63 are used to interrupt the supply of the liquid fluid to the mixing member 40 if the temperature of the gaseous fluid is low enough to be dangerous for the plant 1 and the persons working there. This is due to the fact that all the temperature measuring devices and the valve connected to the buffer tank or volume are connected to the control and command unit 100, which oversees the operation of the device 5.

Finally, the lines 14 and 15 are provided with corresponding valves 70 and 71 controlled by the control and command unit 100.

The line 15 conveys the gaseous fluid out of the plant for safety reasons. In particular, if the pressure inside the mixing member 40 and/or the pressure inside the buffer volume 55 increase beyond the safety limit, the overpressure is discharged to a safe zone through the valve 70 and the line 15.

The invention ensures a flow of the gaseous fluid at a uniform temperature, said temperature being ensured over time by continuously controlling the liquid fluid flowing towards the mixing member 40.

In addition, in this mixing member, the liquid fluid exchanges thermal energy with the gaseous fluid in such a way that the exchange does not create sudden temperature changes in the two fluids, avoiding consequential problems. The temperature exchange between the fluids takes place in a controlled manner (through flow control) and is also appropriately slowed down over time on account of the shape of the terminal portions 10A and 11A of the lines 10 and 11 inside the mixing member.

Obviously the device 5 is equipped with all of the safety systems required to avoid risks for the operators of the plant 1 and the operators of the device itself.

The invention ensures that the product being ground is subjected to a flow of the low-temperature gaseous fluid that is constant over time, throughout the processing thereof, allowing said processing to be optimized. In addition, since most products are packaged in a nitrogen-protected atmosphere, the invention allows the same gas to be used for processing. If the cryogenic grinder is combined with the packaging machine, part of the gaseous nitrogen used for grinding can be recovered and reused in packaging, with significant economic advantages linked to nitrogen savings.

In addition, the invention obviates particular stresses on the mechanical members of the cryogenic grinder subjected to the flow of the gaseous fluid, since the dangerous contact between these members and a liquid at very low temperature is avoided.

A specific embodiment of the invention applied to a cryogenic grinder has been described. Obviously, the invention can also be applied to a machine for processing other equivalent products or used to cool a machine other than a cryogenic grinder, such as a machine for packaging dairy or milk-derived products.

Other embodiments (which may involve different types of control, different arrangements of the lines 10 and 11 inside the mixing member or other solutions conceivable by a person skilled in the art described above) are nonetheless possible and should be considered to fall inside the scope of the invention defined by the attached claims.

## Claims

1. Device for injecting a fluid, in particular nitrogen at a low controlled temperature, in a plant (1) for processing a product such as a food product, said fluid being used to cool the product or parts of a machine (3) in which said product is present or being processed, said device comprising a mixing member (40) intended to receive the liquid fluid and the gaseous fluid from a respective first or second supply line (10, 11), the gaseous fluid being cooled by heat exchange with the liquid fluid in said mixing member (40), an outlet line (60) being provided to transfer the low-temperature gaseous fluid to said plant (1), said first and second supply lines (10, 11) having terminal portions (10A, 11A) inside the mixing member (40), the terminal portions (10A, 11A) of said supply lines (10, 11) being arranged such that the liquid fluid exiting the first supply line (10) inside said mixing member (40) interacts with the gaseous fluid exiting the second supply line (11) for sufficient time to be cooled, **characterized in that** the terminal portion (10A) of the first supply line (10) is straight and bears a plurality of nozzles (47) distributed along said portion, the terminal portion (11A) of the second supply line (11) being spiral-shaped and containing the terminal portion (10A) of the first supply line (10), said nozzles (47) of the first supply line (10) spraying liquid fluid towards said second supply line (11) and **in that** the gaseous fluid line is first wound about the mixing member (40) to pre-cool the gaseous fluid by indirect heat exchange before the line (11) enters the mixing member (40) in which the heat exchange takes place directly between the liquid and the gaseous fluid.

2. Device according to Claim 1, **characterized in that** the mixing member (40) extends along a longitudinal axis (W) arranged vertically, the first line (10) entering said mixing member (40) via the lower end (42) thereof and extending, via the terminal portion (10A) thereof, to near to the upper end or first end (41) of the mixing member (40), through this upper end or first end (41) of said mixing member (40), the second supply line (11) conveying the gaseous fluid entering said member, an open terminal portion (11A) of said second supply line (11) terminating near to the lower end or second end (42) of the mixing member, the gaseous fluid exiting from an open end (44) of said terminal portion (11A) of the second supply line (11), rising up the mixing member to the first end (41) of said mixing member in order to come into contact with the liquid fluid exiting from the terminal portion (10A) of the first supply line (10) and moving towards the second end (42) of said mixing member (40).

3. Device according to Claim 1, **characterized in that** a withdrawal line (50) for the cooled gaseous fluid extends inside the mixing member (40) and is used to withdraw this gaseous fluid through an open free end (53) near the first end (41) of the mixing member.

4. Device according to Claim 3, **characterized in that** said withdrawal line exits the mixing member (40) through the second end (42) thereof and is connected to a buffer tank or volume (55).

5. Device according to the preceding claims, **characterized in that** said buffer tank or volume (55) is connected to the outlet line (60) that carries the cooled gaseous nitrogen to the plant (1) .

6. Device according to Claim 1, **characterized in that** the first supply line (10) is provided with flow-regulation and sensor valve members (20, 24) to control the flow of liquid fluid in said first supply line and to allow the flow to be interrupted when the liquid fluid reaches a minimum limit temperature.

7. Device according to Claim 1, **characterized in that** the outlet line (60) is provided with members for measuring the temperature of the gaseous fluid to allow control of the flow of liquid nitrogen entering the mixing member.

8. Device according to Claim 1, **characterized in that** it has a control unit (100) for the gaseous fluid flows inside the device in order to regulate the temperature of the gaseous fluid leaving the plant (1).
